# FASCICULE DE BREVET EUROPEEN

(11) **EP 0 399 862 B1**
(45) Date de publication et mention de la délivrance du brevet: **09.03.1994**
(21) Numéro de dépôt: 90401201.0
(22) Date de dépôt: 04.05.1990
(51) Int. Cl.: G01S 3/78, F41G 7/30

(54) **Dispositif de ralliement de missile**
Vorrichtung zur Raketensteuerung
Apparatus for missile homing

(30) Priorité: 23.05.1989 FR 8906718
(43) Date de publication de la demande: 28.11.1990
(73) Titulaire: THOMSON-CSF, 75008 Paris (FR)
(72) Inventeur: Le Bars, Jean-François, F-92045 Paris la Défense (FR); Vilbois, Vincent, F-92045 Paris la Défense (FR); Dez, Olivier, F-92045 Paris la Défense (FR)
(74) Mandataire: Lincot, Georges

(56) Documents cités:
- EP-A- 0 099 769
- FR-A- 2 312 760
- GB-A- 2 071 957
- GB-A- 2 087 185
- GB-A- 2 184 313
- US-A- 4 193 688
- US-A- 4 236 177
- US-A- 4 773 754

## Description

L'invention concerne un dispositif de ralliement de missile. Un système d'armes classique comporte une rampe de lancement de missiles, un dispositif de poursuite de cible, et un dispositif de ralliement de missile. Le dispositif de poursuite de cible peut être du type radar ou du type optoélectronique, mais dans tous les cas il couvre un champ étroit.

Un missile est tiré d'une rampe qui est située à une certaine distance du dispositif de poursuite de cible. En outre, la trajectoire du missile au démarrage est relativement aléatoire, même si la direction de la rampe de lancement est parfaitement parallèle à la ligne de visée du dispositif de poursuite, en direction de la cible. Par conséquent, le missile a peu de chance de rentrer dans le champ étroit couvert par le dispositif de poursuite de cible. Il est donc nécessaire de prévoir un dispositif dit de ralliement de missile, ayant un large champ d'acquisition, pour localiser le missile dès sa sortie de la rampe de lancement et déterminer des coordonnées permettant de rallier le missile sur la ligne de visée du dispositif de poursuite de cible. Le missile est rallié classiquement soit par télécommande, soit par un faisceau directeur.

Les dispositifs connus de ralliement de missile sont du type radar à grand angle, ou du type à faisceau directeur laser, ou du type à pseudo-imagerie ou imagerie infrarouge.

Les dispositifs à pseudo-imagerie, ou à imagerie infrarouge, localisent le missile par le rayonnement infrarouge de la tuyère. Ils comportent un dispositif optomécanique de balayage, et un ou plusieurs capteurs photosensibles dans le domaine infrarouge. Par exemple, le dispositif optomécanique balaie l'image d'un champ d'acquisition ayant une largeur angulaire de 10°, sous la forme d'une image carrée qui est analysée en 100x100 pixels.

Un signal vidéo résultant de cette analyse est appliqué à des moyens électroniques de traitement pour détecter la présence du missile et déterminer ses coordonnées par rapport à un repère centré au centre de l'image. Ces coordonnées traduisent l'écart angulaire entre la direction où est située le missile et une ligne de visée commune au dispositif de ralliement et au dispositif de poursuite de cible. Du fait que ces dispositifs de ralliement connus analysent l'ensemble du champ d'acquisition, qui est large, le balayage doit être rapide et la bande passante des moyens électroniques de traitement doit donc être large. Ceci diminue la sensibilité du dispositif, à cause du bruit, et donc réduit la portée du dispositif de ralliement, ou bien nécessite des moyens d'analyse d'image, et de traitement, plus complexes pour obtenir une grande portée. D'autre part, le missile est toujours en bordure du champ au début du vol, et au centre du champ en fin de vol, donc une grande partie du champ qui est éloignée de la partie où se trouve le missile est analysée inutilement, ce qui rend le dispositif de ralliement sensible à la présence du soleil ou à la présence de leurres.

Le but de l'invention est de proposer un dispositif de ralliement, du type à imagerie ou pseudo-imagerie, qui soit plus simple que les dispositifs connus, tout en ayant une portée supérieure, et qui soit moins sensible à la présence du soleil ou de leurres. L'objet de l'invention est un dispositif de ralliement qui exploite le fait que le missile entre toujours dans le champ d'acquisition à partir de la périphérie de ce champ. Il suffit donc d'analyser un champ d'acquisition tel que sa section, par un plan perpendiculaire à la ligne de visée, a la forme d'un anneau, la zone centrale étant une zone aveugle, et ayant un diamètre variable au fur et à mesure que le missile se rapproche de la ligne de visée. Le diamètre étant large au moment du départ, le missile est obligé de rentrer dans le champ, puis une réduction du diamètre permet de conserver le missile dans le champ, tout en évitant, dans de nombreux cas, la présence du soleil ou de leurres.

A chaque instant, le champ d'acquisition couvre un angle solide plus faible que les dispositifs connus, ce qui correspond à un nombre de pixels analysés plus réduit. Par conséquent, la bande passante des moyens électroniques de traitement peut être réduite. Le rapport signal sur bruit est donc meilleur que dans les dispositifs connus. La portée du dispositif selon l'invention est donc supérieure, dans les mêmes conditions d'acquisition d'un missile.

Selon l'invention, un dispositif de ralliement de missile, pour déterminer des coordonnées traduisant l'écart angulaire entre la direction où est situé un missile et une ligne de visée où est située une cible, comportant : des moyens pour analyser une image infrarouge, des moyens pour déterminer des coordonnées traduisant l'écart angulaire, à partir de signaux fournis par les moyens pour analyser,
est caractérisé en ce que les moyens pour analyser une image, couvrent un champ dont la section, par un plan perpendiculaire à la ligne de visée, est un anneau ayant un diamètre variable en fonction de l'écart angulaire entre la direction où est situé le missile et la ligne de visée.

Selon une autre caractéristique du dispositif de ralliement selon l'invention, il comporte un dispositif de filtrage spectral au voisinage de 4,4 microns, permettant de réduire éventuellement la sensibilité à la présence du soleil et à la présence de leurres, lorsque le soleil ou un leurre est présent dans le champ d'acquisition.

L'invention sera mieux comprise et d'autres détails apparaîtront à l'aide de la description ci-dessous et des figures l'accompagnant :
- la figure 1 illustre l'utilisation d'un dispositif de ralliement de missile, en association avec un dispositif de poursuite de cible ;
- la figure 2 représente schématiquement le champ balayé par le dispositif de ralliement selon l'invention, à trois instants successifs ;
- la figure 3 représente le schéma synoptique d'un exemple de réalisation du disposition selon l'invention ;
- la figure 4 représente une variante d'une partie de cette exemple de réalisation.

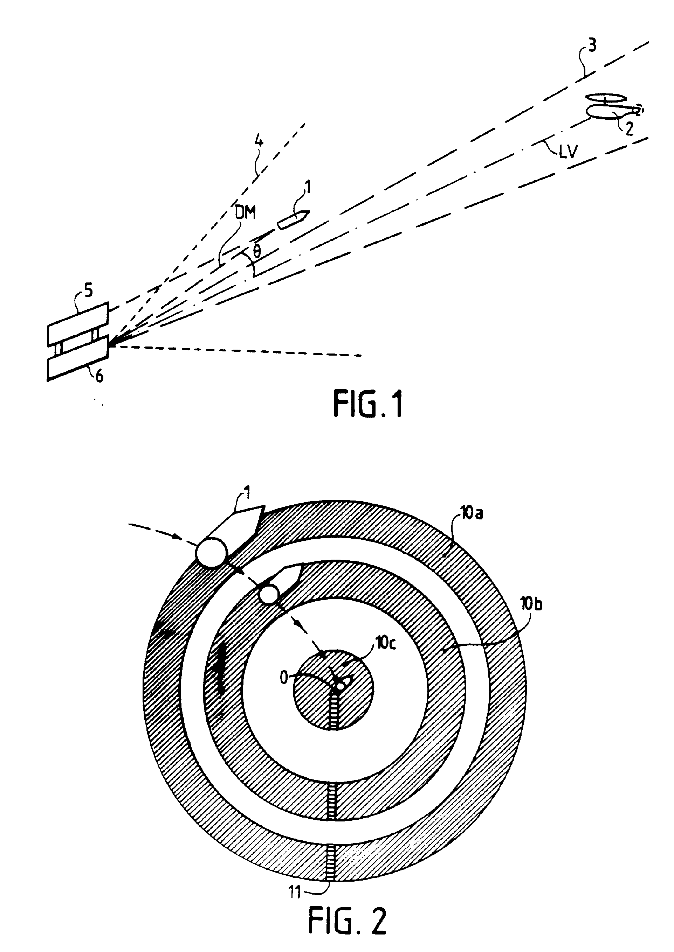

La figure 1 représente un missile 1 qui est tiré par une rampe de lancement 5, en direction d'une cible 2, cette cible étant poursuivie par un dispositif de poursuite de cible situé dans un poste de tir 6 qui est solidaire de la rampe de lancement 5. La rampe de lancement guide le missile dans une direction parallèle à la ligne de visée LV du dispositif de poursuite de cible, mais des aléas provoquent un certain écart angulaire ϑ entre la direction DM où est situé le missile et la ligne de visée LV. Le dispositif de poursuite de cible couvre un champ 3 qui est très étroit, par conséquent le missile 1 risque de ne jamais pénétrer dans ce champ 3 et de rester invisible pour le dispositif de poursuite de cible. Il est donc prévu un dispositif de ralliement de missile ayant la même ligne de visée LV et couvrant un champ 4 ayant une ouverture très supérieure à celle du champ 3, pour que le missile 1 pénètre de façon certaine dans ce champ 4. Après que le missile 1 ait pénétré dans le champ 4, le dispositif de ralliement détermine des coordonnées du missile, puis un dispositif classique, à télécommande ou à faisceau directeur, ramène le missile sur la ligne de visée LV.

La figure 2 représente schématiquement le champ balayé par le dispositif de ralliement selon l'invention. L'intersection du champ, avec un plan perpendiculaire à la ligne de visée LV, est représentée par des hachures, à trois instants successifs. Le plan d'intersection est supposé situé à une distance fixe par rapport au poste de tir. Au premier instant, situé au début du vol du missile 1, la section du champ a la forme d'un anneau 10a dans lequel pénètre le missile 1, lorsqu'il pénètre dans le cône constituant l'enveloppe extérieure du champ 4. La ligne de visée passe par le centre o de l'anneau 10a. La largeur de l'anneau correspond à la longueur d'un capteur photosensible 11 que comporte le dispositif de ralliement et qui sera décrit plus loin.

A un deuxième instant, la section du champ est un anneau 10b ayant la même largeur mais ayant un diamètre plus réduit, de telle sorte que le missile 1 reste dans le champ au fur et à mesure qu'il se rapproche de la ligne de visée LV. Hors de l'anneau 10a ou 10b, le dispositif de ralliement est totalement insensible à la présence du soleil et à la présence de leurres, notamment dans la zone centrale de l'anneau. A un troisième instant, au cours de la phase finale de la propulsion du missile, celui-ci s'est suffisamment rapproché de la ligne de visée pour que la section du champ ait la forme d'un disque 10c, car la zone centrale insensible disparaît. Le diamètre de la section du champ garde ensuite une valeur constante. Le champ du dispositif de ralliement est alors balayé de manière uniforme, sans zone aveugle au centre, mais sa dimension est beaucoup plus réduite que celle des dispositifs classiques de ralliement à champ fixe. Par conséquent, sa portée est considérablement augmentée et il y a peu de chances que le soleil ou des leurres soient présents dans un champ ayant une ouverture aussi réduite.

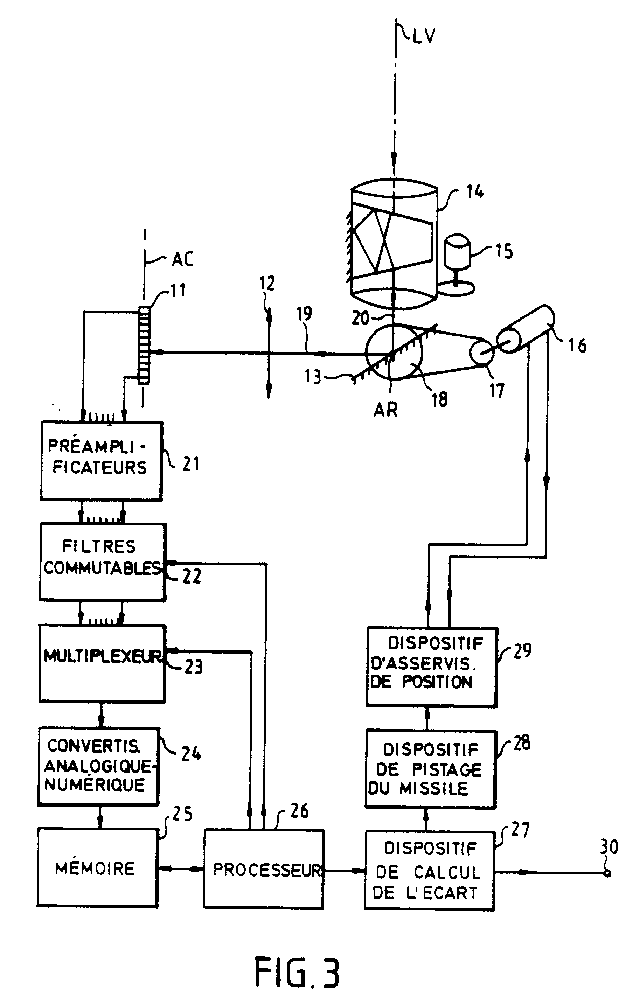

La figure 3 représente le schéma synoptique d'un exemple de réalisation du dispositif de ralliement selon l'invention. Il est destiné à être associé mécaniquement à un dispositif de poursuite de cible, de façon à avoir une ligne de visée LV qui est parallèle et pratiquement confondue avec celle du dispositif de poursuite de cible. Cet exemple de réalisation comporte des moyens pour projeter et déplacer une image de façon à l'analyser au moyen d'un capteur 11. L'image du champ est balayée circulairement par le capteur 11 qui est constitué d'un alignement de cellules photosensibles dont le grand axe AC passe par le centre de l'image. L'image a la forme d'un anneau centré sur la ligne de visée LV. La présence et la position du missile sont donc détectées par le passage de l'image du missile sur au moins l'une des cellules du capteur 11. Ces moyens pour projeter et déplacer l'image comportent essentiellement : un objectif 12 ; un miroir mobile 13 ; et un prisme tournant, dit prisme de Taylor, 14.

L'objectif 12 est placé entre le capteur 11 et le miroir 13. Il forme une image sur le capteur 11. Le miroir 13 est un miroir plan, mobile en rotation autour d'un axe AR passant par le plan du miroir et qui est perpendiculaire à la fois à l'axe optique de l'objectif 12 et au grand axe AC de l'alignement de cellules constituant le capteur 11. Le miroir 13 est mû en rotation par un dispositif d'asservissement de position comportant un moteur associé à un capteur de position angulaire 16, et comportant une transmission par deux poulies 17 et 18 reliées par une courroie.

L'axe de rotation et l'axe optique du prisme tournant 14 sont confondus avec la ligne de visée LV du dispositif de ralliement. Cette ligne de visée LV est parallèle à l'axe AC et orthogonale à l'axe optique de l'objectif 12. L'axe optique du prisme tournant 14 et l'axe optique de l'objectif 12 se rejoignent sur l'axe de rotation AR du miroir. Le prisme tournant 14 a une vitesse de rotation constante et il est mû par un moteur 15.

Un rayon lumineux 20 capté dans le champ du dispositif de ralliement est dévié par le miroir 13 dans un plan contenant la ligne de visée LV et contenant le grand axe AC du capteur 11. La position angulaire du miroir 13 détermine l'ouverture du champ de ralliement, c'est-à-dire le diamètre de sa section. Le prisme tournant 14 provoque la rotation du faisceau 20 autour d'un axe de rotation confondu avec la ligne de visée LV. Le mouvement de rotation du prisme 14, pour une position donnée du miroir 13, provoque le défilement circulaire d'une image sur le capteur 11. Ce dernier analyse donc un anneau de cette image, dont le diamètre est déterminé par la position angulaire du miroir 13. Le capteur 11 analyse simultanément 12 pixels situés sur un rayon de l'image. La position angulaire du miroir 13 varie au cours du temps, en fonction de l'écart angulaire entre la ligne de visée LV et la direction DM où est situé le missile à l'instant considéré. Cette direction DM est connue en déterminant la position du missile dans l'image analysée par le capteur 11.

Cet exemple de réalisation comporte en outre douze préamplificateurs 21 ayant des entrées reliées respectivement aux douze cellules photosensibles du capteur 11, et ayant douze sorties reliées respectivement à des entrées de douze filtres commutables 22. Les caractéristiques de ces filtres sont modifiées, au cours du vol du missile, pour qu'ils aient une bande passante large au début du vol, lorsque le missile est facilement visible mais se déplace rapidement d'un pixel à un autre ; et pour qu'ils aient une bande passante réduite au cours du vol, et en particulier à la fin du vol, lorsqu'il est nécessaire d'augmenter la sensibilité du dispositif de ralliement en éliminant le bruit produit par le capteur 11. Pendant la fin du vol la bande passante large n'est plus nécessaire parce que l'image de missile se déplace lentement d'un pixel à un autre.

Une sortie de chacun des douze filtres 22 est reliée respectivement à une entrée d'un multiplexeur 23 à douze entrées et à une sortie. Cette dernière est reliée à l'entrée d'un convertisseur analogique-numérique 24. Le multiplexeur 23 est commandé pour sélectionner séquentiellement les signaux correspondant aux douze cellules photosensibles du capteur 11. Le convertisseur 24 a une sortie reliée à une entrée de données d'une mémoire 25, où sont stockées les valeurs des douze signaux fournis par les douze cellules photosensibles. Un processeur 26 est relié, par des bus, à la mémoire 25 pour commander la lecture et l'écriture des valeurs de ces signaux. Le processeur 26 possède aussi des sorties de commande reliées respectivement à des entrées de commande des filtres commutables 22 pour commander leur bande passante au cours du vol du missile ; et une sortie reliée à une entrée de commande du multiplexeur 23 pour sélectionner des échantillons de chacun des signaux fournis par les douze cellules photosensibles, après amplification par les préamplificateurs 21 et filtrage par les filtres 22.

Le processeur 26 a une sortie reliée à une entrée d'un dispositif 27 de calcul de l'écart entre la ligne de visée LV et la direction DM est situé le missile. Le processeur 26 fournit la position du missile telle qu'elle est détectée dans l'image analysée. Le dispositif 27, qui est un dispositif classique d'écartométrie, en déduit des coordonnées à fournir à un dispositif de télécommande ou à un dispositif émettant un faisceau directeur, dans le but de ramener le missile dans la direction de la ligne de visée. Le dispositif de calcul 27 possède une sortie reliée à une borne de sortie 30 pour fournir deux coordonnées traduisant cet écart. Il possède aussi une sortie reliée à une entrée d'un dispositif 28 de pistage du missile qui est un dispositif classique mémorisant la vitesse du missile pour prédire l'évolution de sa trajectoire.

Le dispositif 28 possède une sortie reliée à une entrée d'un dispositif 29 d'asservissement de position pour lui fournir une valeur de consigne traduisant l'écart angulaire entre la ligne de visée et la direction où est situé le missile, avec une certaine anticipation. Le dispositif 29 possède une sortie reliée au moteur d'asservissement 16 et une entrée reliée au capteur de position associé au moteur 16. Le dispositif 29 commande le moteur 16 pour qu'il prenne la position correspondant à la valeur de consigne. La transmission par les poulies 17 et 18 et leur courroie, multiplie la précision de l'asservissement de position du miroir.

Le dispositif 29 est un asservissement de position classique. La programmation du microprocesseur 26 pour réaliser les fonctions décrites ci-dessus est à la portée de l'homme de l'art.

Si le cône d'enveloppe du champ a une demi-ouverture angulaire de 5°, et si la largeur de l'anneau correspond à une ouverture angulaire de 1°, on montre que l'angle solide du champ est réduit dans un rapport égal à 3 par rapport à un champ ayant une section carrée de largeur correspondant à une ouverture angulaire 10°. Et cette réduction atteint un rapport de 30 lorsque le missile est rallié sur la ligne de visée. Le nombre de cellules photosensibles peut donc être réduit par rapport à un dispositif classique, ou bien les performances peuvent être augmentées si le nombre de cellules est maintenu. Les traitements électroniques, notamment pour éliminer les fausses alarmes, sont eux aussi considérablement simplifiés. Il est à remarquer que le mode de balayage utilisé ne comporte aucun temps mort, par conséquent le balayage a un rendement de 100% pour l'analyse de l'image. Enfin, la probabilité de la présence du soleil ou de la présence de leurre dans le champ analysé est réduite dans la même proportion.

Dans le cas où le soleil est présent dans le champ, avant le lancement du missile, il est possible dans certains cas de modifier la position du miroir plan 11, d'un angle faible, de manière a faire sortir le soleil du champ, sans empêcher l'acquisition du missile par le dispositif de ralliement. Cependant, dans certaines applications, notamment l'utilisation à bord d'un bateau, il peut s'avérer que les reflets de la lumière solaire soient très nombreux et causent des fausses alarmes. Un perfectionnement au dispositif selon l'invention permet de remédier à ce problème.

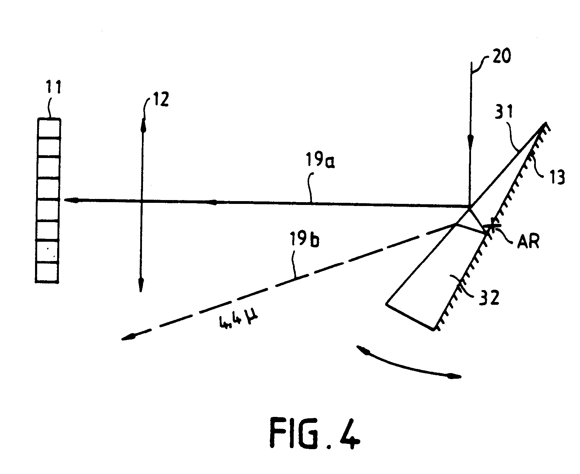

La figure 4 représente une variante de réalisation du miroir 13, comportant un prisme transparent 32 qui porte, sur une première face, une couche dichroïque 31 réalisant un filtrage étroit. Une seconde face du prisme 32 est collée sur la surface du miroir 13. La surface dichroïque 31 réfléchit l'intégralité de la lumière sauf une bande très étroite aux alentours de la longueur d'onde de 4,4 microns, dans le cas d'un dispositif de ralliement travaillant dans la bande de 3 à 5 microns. Un rayon lumineux incident 20 est dévié selon un rayon 19a et un rayon 19b, faisant deux angles différents par rapport au rayon incident 20. Le rayon 19a, qui est réfléchi par la surface dichroïque 31,comporte presque l'intégralité des longueurs d'onde, alors que le rayon 19b ne comporte que la longueur de 4,4 microns car il a traversé la surface dichroïque 31, s'est réfléchi sur la surface métallisée du miroir 13 puis a retraversé la surface dichroïque 31.

Il est à remarquer que le rayon 19b traverse deux fois la surface dichroïque 31 ce qui double l'efficacité du filtrage par cette surface dichroïque 31, et permet donc de simplifier sa réalisation.

L'angle du prisme 32 détermine l'écart angulaire entre les rayons 19a et 19b. En l'absence de soleil, la position du miroir 13 est commandée pour dévier vers l'objectif 12 les rayons réfléchis par surface dichroïque 31, tels que le rayon 19a ; et dévier les rayons tel que le rayon 19b hors de l'objectif 12. La perte d'énergie est faible du fait que la bande de longueurs d'onde qui traverse la surface dichroïque 31 est étroite.

Il est prévu une sortie du processeur 26 reliée à une entrée supplémentaire du dispositif 29 d'asservissement de position, pour lui fournir un signal de commande dans le cas où le processeur 26 détecte des fausses alarmes dues à la présence du soleil ou à la présence de leurre, afin de commander la réalisation du filtrage au voisinage de 4,4 microns.

En présence du soleil ou de leurres, c'est-à-dire s'il y a détection de fausses alarmes par le processeur 26, le dispositif 29 d'asservissement de position est commandé par le processeur 26, par l'intermédiaire des dispositifs 27 et 28, pour décaler le miroir 13 d'un angle prédéterminé égal à l'angle du prisme 32. La surface dichroïque 31 vient à la place de la surface du miroir 13, de façon à dévier le rayon 19b en direction de l'objectif 12 et à dévier le rayon 19a hors de l'objectif 12. L'image analysée ne comportant que des longueurs d'onde au voisinage de 4,4 microns, elle comporte peu d'énergie due au soleil ou aux leurres.

## Revendications

1. Dispositif de ralliement de missile, pour déterminer des coordonnées traduisant l'écart angulaire entre la direction (DM) où est situé un missile (1) et une ligne de visée (LV) où est située une cible (2), comportant : des moyens (11 à 18) pour analyser une image infrarouge, des moyens (21 à 27) pour déterminer des coordonnées traduisant l'écart angulaire, à partir de signaux fournis par les moyens pour analyser (11 à 18) ;
caractérisé en ce que les moyens pour analyser une image, couvrent un champ dont la section, par un plan perpendiculaire à la ligne de visée (LV), est un anneau (10) ayant un diamètre variable en fonction de l'écart angulaire (ϑ) entre la direction (DM) où est situé le missile et la ligne de visée (LV).

2. Dispositif selon la revendication 1, caractérisé en ce que les moyens pour analyser comportent :
- un capteur constitué d'au moins un alignement de cellules photosensibles (11) ;
- un dispositif (13 à 18) pour dévier un faisceau de lumière (20) capté par le dispositif de ralliement, dans un plan passant par la ligne de visée (LV) et passant par le grand axe (AC) de l'alignement de cellules (11) ;
- un dispositif (14) pour faire tourner le faisceau de lumière (20) capté par le dispositif de ralliement, autour d'un axe de rotation confondu avec la ligne de visée (LV).

3. Dispositif selon la revendication 2, caractérisé en ce que le dispositif (13 à 18) pour dévier un faisceau de lumière (20) dans un plan, comporte :
- un miroir (13), mobile autour d'un axe (AR) perpendiculaire au grand axe (AC) de l'alignement de cellules (11) et perpendiculaire à la ligne de visée (LV) ;
- un asservissement de position (16,29) asservissant la position du miroir (13) autour de son axe de rotation (AR), en fonction des coordonnées traduisant l'écart angulaire (ϑ) entre la direction (DM) où est situé le missile et la ligne de visée (LV), pour asservir le diamètre de l'anneau sur l'écart angulaire, le missile étant ainsi maintenu dans le champ (10) couvert par les moyens pour analyser une image.

4. Dispositif selon la revendication 3, caractérisé en ce que le miroir est un miroir plan (13), et en ce qu'il comporte en outre :
- un prisme transparent (32) portant une surface dichroïque plane (31) laissant passer une bande étroite de longueurs d'onde au voisinage de 4,4 microns, ce prisme étant fixé sur la surface du miroir (13) par sa face opposée à la face portant la surface dichroïque (31) ;
- des moyens de commande (26 à 28) commandant le dispositif d'asservissement de position (16, 29) pour décaler la position du miroir, d'un angle fixé de façon à mettre la surface dichroïque (31) à la place de la surface du miroir (13) dans le cas où le soleil ou un leurre est présent dans le champ couvert par les moyens pour analyser.

## Claims

1. Missile homing apparatus for determining coordinates representing the angular discrepancy between the direction (DM) in which a missile (1) is situated and a line of sight (LV) in which a target (2) is situated, including: means (11 to 18) for analysing an infrared image, means (21 to 27) for determining coordinates representing the angular discrepancy, from signals provided by the means for analysing (11 to 18);
characterized in that the means for analysing an image cover a field whose cross-section, through a plane perpendicular to the line of sight (LV), is an annulus (10) having a diameter which varies as a function of the angular discrepancy (ϑ) between the direction (DM) in which the missile is situated and the line of sight (LV).

2. Apparatus according to Claim 1, characterized in that the means for analysing include:
- a sensor consisting of at least one row of photosensitive cells (11);
- an apparatus (13 to 18) for deflecting a light beam (20) sensed by the homing apparatus, in a plane passing through the line of sight (LV) and passing through the major axis (AC) of the row of cells (11);
- an apparatus (14) for turning the light beam (20) sensed by the homing apparatus, about an axis of rotation coinciding with the line of sight (LV).

3. Apparatus according to Claim 2, characterized in that the apparatus (13 to 18) for deflecting a light beam (20) in a plane, includes:
- a mirror (13), mobile about an axis (AR) perpendicular to the major axis (AC) of the row of cells (11) and perpendicular to the line of sight (LV);
- a position control (16, 29) controlling the position of the mirror (13) about its axis of rotation (AR), as a function of the coordinates representing the angular discrepancy (ϑ) between the direction (DM) in which the missile is situated and the line of sight (LV), in order to control the diameter of the annulus by the angular discrepancy, the missile thereby being maintained in the field (10) covered by the means for analysing an image.

4. Apparatus according to Claim 3, characterized in that the mirror is a plane mirror (13), and in that it furthermore includes:
- a transparent prism (32) bearing a plane dichroic surface (31) allowing through a narrow band of wavelengths in the vicinity of 4.4 microns, this prism being fixed to the surface of the mirror (13) by its face opposite the face bearing the dichroic surface (31);
- operating means (26 to 28) operating the position control apparatus (16, 29) in order to shift the position of the mirror by an angle fixed so as to set the dichroic surface (31) in the place of the surface of the mirror (13) in the case where the sun or a decoy is present in the field covered by the means for analysing.

## Patentansprüche

1. Vorrichtung zum Einfangen einer Rakete und zur Bestimmung der Koordinaten des Winkelabstands zwischen der Richtung (DM), in der sich die Rakete (1) befindet, und einer Visierlinie (LV), in der sich ein Ziel (2) befindet, wobei die Vorrichtung Mittel (11 bis 18) zur Analyse eines Infrarotbilds und Mittel (21 bis 27) zur Bestimmung der Koordinaten aufweist, die den Winkelabstand aufgrund von von den Analysiermitteln (11 bis 18) gelieferten Signalen wiedergeben, dadurch gekennzeichnet, daß die Mittel zur Bildanalyse ein Feld überdecken, dessen Querschnitt in einer Ebene senkrecht zu Visierlinie (LV) ein Ring (10) ist, dessen Durchmesser sich abhängig vom Winkelabstand (Θ) zwischen der Richtung, in der sich die Rakete befindet, und der Visierlinie (LV) verändert.

2. Vorrichtung nach Anspruch 1, dadurch gekennzeichnet, daß die Analysiermittel aufweisen:
- eine Sonde, bestehend aus mindestens einer Reihe von lichtempfindlichen Zellen (11),
- eine Vorrichtung (13 bis 18), um einen von der Einfangvorrichtung erfaßten Lichtstrahl (20) in einer Ebene abzulenken, die durch die Visierlinie (LV) und durch die große Achse (AC) der Reihe von Zellen (11) verläuft,
- eine Vorrichtung (14), um den von der Einfangvorrichtung erfaßten Lichtstrahl (20) um eine mit der Visierlinie (LV) zusammenfallenden Drehachse drehen zu lassen.

3. Vorrichtung nach Anspruch 2, dadurch gekennzeichnet, daß die Vorrichtung (13 bis 18) zur Ablenkung eines Lichtstrahls (20) in einer Ebene aufweist:
- einen Spiegel (13), der um eine Achse (AR) senkrecht zur großen Achse (AC) der Reihe von Zellen (11) und senkrecht zur Visierlinie (LV) beweglich ist,
- eine Lagenachregelvorrichtung (16, 29), die die Lage des Spiegels (13) um seine Drehachse (AR) abhängig von Koordinaten nachregelt, die ein Maß für den Winkelabstand (Θ) zwischen der Richtung (DM), in der sich die Rakete befindet, und der Visierlinie (LV) sind, um den Durchmesser des Ringes gemäß dem Winkelabstand nachzuregeln, so daß die Rakete im Sichtfeld (10) gehalten wird, das von den Bildanalysiermitteln überstrichen wird.

4. Vorrichtung nach Anspruch 3, dadurch gekennzeichnet, daß der Spiegel ein ebener Spiegel (13) ist und daß die Vorrichtung weiter enthält:
- ein transparentes Prisma (32) mit einer dichroitischen ebenen Oberfläche (31), die ein schmales Band von Wellenlängen in der Umgebung von 4,4 Mikrometer durchläßt, wobei dieses Prisma auf der Oberfläche des Spiegels (13) mit seiner der dichroitischen Oberfläche entgegengesetzten Fläche befestigt ist,
- Steuermittel (26 bis 28), die die Lagenachregelvorrichtung (16, 29) steuern, um die Lage des Spiegels um eine festen Winkel zu versetzen, so daß die dichroitische Oberfläche (31) an die Stelle der Oberfläche des Spiegels (13) tritt, wenn die Sonne oder ein Täuschobjekt in dem durch die Analysiermittel erfaßten Sichtfeld vorliegt.
